# FASCICULE DE BREVET EUROPEEN

(11) **EP 3 164 607 B1**
(45) Date de publication et mention de la délivrance du brevet: **09.01.2019**
(21) Numéro de dépôt: 15756955.9
(22) Date de dépôt: 26.06.2015
(51) Int. Cl.: F15B 1/08

(54) **ACCUMULATEUR DE PRESSION HYDRAULIQUE ÉQUIPÉ D'UN SYSTÈME DE SÉCURITÉ EXTERNE COMPORTANT UNE CANALISATION**
HYDRAULISCHER DRUCKSPEICHER MIT EINEM EXTERNEN SICHERHEITSSYSTEM MIT EINER ROHRLEITUNG
HYDRAULIC PRESSURE ACCUMULATOR PROVIDED WITH AN EXTERNAL SECURITY SYSTEM COMPRISING A PIPELINE

(30) Priorité: 01.07.2014 FR 1456245
(43) Date de publication de la demande: 10.05.2017
(73) Titulaire: Technoboost, 75116 Paris (FR)
(72) Inventeur: LE DREN, Arnaud, 91800 Brunoy (FR); REJMAN, Virginie, 27810 Marcilly Sur Eure (FR); HALAIS, Bernard, 75013 Paris (FR)
(74) Mandataire: Fernandez, Francis Lionel
(86) Numéro de dépôt international: PCT/FR2015/051741
(87) Numéro de publication internationale: WO 2016/001542

(56) Documents cités:
- FR-A- 1 218 455
- FR-A1- 2 972 504
- FR-A5- 2 052 883
- JP-A- S58 207 501

## Description

La présente invention concerne un accumulateur de pression hydraulique équipé d'un système de sécurité, ainsi qu'un véhicule automobile hybride comprenant un tel accumulateur de pression.

Les accumulateurs de pression hydraulique comportent généralement un corps formant un volume fermé résistant à la pression, comprenant une membrane élastique interne séparant une chambre contenant un gaz sous pression, d'une chambre recevant le fluide maintenu à la pression par ce gaz.

La chambre hydraulique comporte un conduit d'alimentation la reliant à un circuit extérieur, afin d'échanger avec ce circuit le fluide maintenu à la pression.

L'accumulateur de pression peut comporter différents systèmes de sécurité disposés directement sur son corps, permettant d'éviter des accidents causés notamment par une projection brutale du fluide vers l'extérieur ou une explosion du corps de l'accumulateur projetant des débris, suite à une rupture venant d'une montée en pression trop élevée, ou d'un choc sur cet accumulateur qui l'affaiblit.

Les accidents peuvent provenir en particulier d'une forte élévation de température venant d'un incendie, qui peut provoquer une montée en pression importante du gaz.

Ces circonstances peuvent se rencontrer en particulier sur un véhicule automobile hybride utilisant une énergie hydraulique, qui comporte des accumulateurs disposant d'un volume relativement élevé afin de stocker une quantité d'énergie importante. En cas d'accident ou d'incendie du véhicule, une projection du fluide sous une forte pression ou une explosion de l'accumulateur peut blesser des passagers du véhicule, ou des secouristes s'approchant de ce véhicule.

Un système de sécurité connu, présenté notamment par le document US-4273251, comporte un disque de rupture plaqué sur un perçage du corps de l'accumulateur relié à la chambre à gaz, qui est soumis à la pression de ce gaz afin de se rompre en cas de pression trop élevée.

Un autre système de sécurité connu, présenté notamment par les documents FR-A5-2052883 et FR-A1-2793852, comporte un disque de rupture formant un fusible plaqué de la même manière sur un perçage calibré du corps de l'accumulateur relié à la chambre à gaz, qui va perdre ses caractéristiques mécaniques au-delà d'une certaine température afin de se percer pour permettre une chute de la pression suivant un débit contrôlé du gaz.

Toutefois un problème qui se pose avec ces systèmes de sécurité, est qu'étant disposés sur le corps de l'accumulateur, ils ne peuvent détecter des défaillances comme une montée en température ou un choc, qui ne s'appliquent pas directement sur cet accumulateur. Par exemple un départ d'incendie à un endroit espacé du véhicule n'entraînera pas de mise en oeuvre de ces systèmes, alors que la pression maintenue dans le circuit hydraulique peut quand même être dangereuse.

De plus le disque fusible disposé directement sur l'accumulateur, présente un certain temps de réaction correspondant à la montée en température de la masse du corps de cet accumulateur.

Les documents JP S58 207501 A et FR-A-1 218 455 divulguent un accumulateur de pression hydraulique conforme au préambule de la revendication 1.

Le document FR-A-2 972 504 décrit une installation avec un accumulateur hydropneumatique à entretien automatisé.

D'autres types de système de sécurité sont connus, comportant par exemple des dispositifs actifs qui peuvent être commandés par un calculateur recevant des informations de choc sur le véhicule, utilisés notamment pour le déclenchement des airbags, ou des informations de départ d'incendie. Dans ce cas on peut détecter une défaillance qui se produit à distance de l'accumulateur de pression, mais ces dispositifs sont complexes et onéreux.

La présente invention a notamment pour but d'éviter ces inconvénients de la technique antérieure.

Elle propose à cet effet un dispositif d'accumulation de pression hydraulique conforme à la revendication 1.

Un avantage de ce dispositif d'accumulation de pression hydraulique est que la canalisation déporte les dispositifs de sécurité à des endroits éloignés de l'accumulateur, ce qui permet de détecter des incidents comme un choc ou une élévation de température directement à ces endroits, et d'engager tout de suite la protection du circuit hydraulique en laissant s'échapper le gaz par l'ouverture afin de faire chuter sa pression.

D'autres caractéristiques sont énoncées dans les revendications dépendantes.

L'invention a aussi pour objet un véhicule automobile hybride disposant d'une chaîne de traction utilisant l'énergie hydraulique, équipée d'un dispositif d'accumulation de pression comportant l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un schéma d'un dispositif d'accumulation de pression hydraulique selon l'art antérieur ;
- la figure 2 est un schéma d'un dispositif d'accumulation de pression hydraulique selon l'invention ;
- la figure 3 est un schéma de ce dispositif d'accumulation, équipé de détecteurs de choc ;
- la figure 4 est un schéma d'un détecteur de choc suivant une variante;
- la figure 5 est un schéma d'un exemple de montage de la canalisation sur l'accumulateur ; et
- la figure 6 est un schéma d'un montage de la canalisation suivant une variante.

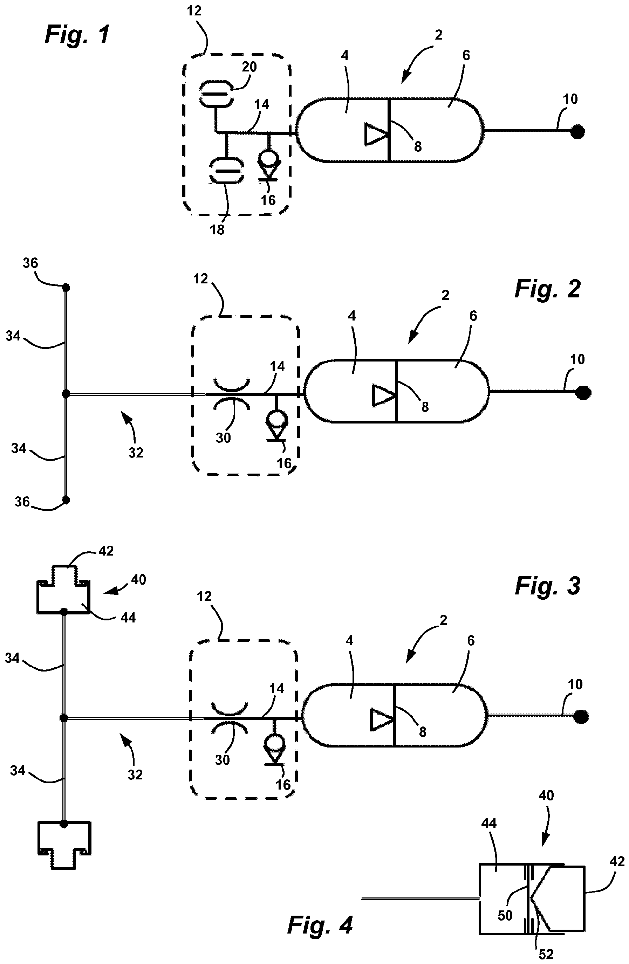

La figure 1 présente un dispositif d'accumulation de pression hydraulique comportant un accumulateur 2 présentant une membrane élastique 8 séparant une chambre contenant le gaz sous pression 4, d'une chambre hydraulique 6 reliée à un circuit hydraulique extérieur 10.

Un bloc de sécurité 12 fixé directement sur le corps de l'accumulateur 2, du côté de la chambre à gaz 4, comporte un conduit interne 14 relié à cette chambre à gaz, qui présente successivement une valve de charge et de décharge du gaz 16 permettant de remplir ou de vider la chambre à gaz, un disque de rupture 18 s'ouvrant en cas de surpression, et un disque fusible thermique 20 s'ouvrant en cas d'exposition à la chaleur.

On assure ainsi la sécurité de l'accumulateur 2 dans le cas d'une surpression interne par le perçage du disque de rupture 18, et dans le cas d'un incendie localisé sur cet accumulateur qui échauffe suffisamment le bloc de sécurité 12 fixé sur le corps, pour provoquer la fusion du disque fusible 20.

Toutefois cette protection n'est pas assurée en particulier dans une installation sur un véhicule, pour un incendie plus éloigné de l'accumulateur 2, ou lors d'un accident qui peut causer des dommages sur le circuit hydraulique entraînant des risques de fuites ou d'explosion.

La figure 2 présente un dispositif d'accumulation de pression hydraulique, comportant de la même manière un bloc de sécurité 12 fixé directement sur le corps de l'accumulateur 2, présentant le conduit interne 14 relié à la chambre à gaz 4.

Le bloc de sécurité comporte la valve de charge et de décharge du gaz 16, ainsi qu'une restriction du passage du gaz 30 qui donne sur une canalisation externe 32. La canalisation externe 32 comporte deux embranchements opposés 34, qui se terminent chacun par un bouchon 36.

La canalisation externe 32 forme ainsi un volume fermé relié à la chambre à gaz 4 de l'accumulateur 2, qui peut parcourir avec un certain nombre d'embranchements, différentes parties du véhicule. On peut en particulier faire parcourir à la canalisation externe 32 un contour du compartiment moteur qui peut être la source d'un départ d'incendie, la façade avant ou les longerons avant qui peuvent recevoir des chocs en cas d'accident sur l'avant du véhicule.

La canalisation externe 32 est flexible, de manière à pouvoir se disposer facilement dans les différentes parties du véhicule. On utilise un tuyau souple en matière plastique étanche contenant le gaz sous pression, qui est entouré d'une tresse métallique assurant la tenue à la pression de ce tuyau souple, ainsi qu'une certaine protection mécanique vers l'extérieur, notamment pour les petits chocs ou les frottements.

En choisissant la température de fusion de la matière plastique du tuyau souple constituant un dispositif de sécurité, entouré de la tresse métallique formant un conducteur thermique, on obtient ainsi pour une montée en température suffisamment importante à un endroit proche du parcours de la canalisation externe 32, un perçage de ce tuyau quand ses caractéristiques mécaniques deviennent insuffisantes pour tenir la pression interne.

Dans le cas d'un choc important sur la canalisation externe 32, par exemple en cas de choc sur le véhicule qui entraîne un écrasement des tôles, et une forte détérioration de la tresse métallique passant dans un passage formé par ces tôles, on peut obtenir aussi un perçage du tuyau souple contenu dedans.

On a alors dans ces cas une ouverture du circuit de gaz, et un vidage rapide de la chambre à gaz 4 en passant par la restriction 30 qui donne une limitation de ce débit, quelle que soit l'ouverture de la canalisation 32 en aval, afin d'éviter un jet de gaz vers l'extérieur trop puissant qui pourrait blesser les personnes.

Simultanément la pression de la chambre hydraulique 6 ainsi que de l'ensemble du circuit hydraulique 10, chute avec celle de la chambre à gaz 4. On assure ainsi la sécurité avec une pression du gaz comme du fluide qui est rapidement amenée à la pression atmosphérique, et ne peut plus causer d'accident.

De plus on peut choisir le matériau du tuyau souple disposé dans la canalisation externe 32, afin de réaliser aussi la fonction de disque de rupture pour une surpression du gaz à l'intérieur de ce tuyau.

On peut aussi choisir le matériau du tuyau souple pour qu'il constitue un témoin d'usure de l'accumulateur 2 au cyclage, comportant un travail en fatigue après un nombre de cycles suffisamment élevé avec une pression assez forte pour obtenir sa rupture.

On peut en particulier disposer la canalisation 32 autour de l'accumulateur 2, afin d'assurer une protection de cet accumulateur quel que soit le choc ou l'agression qui se produit autour de lui, dans une direction quelconque.

La figure 3 présente la canalisation 32 comportant un dispositif de sécurité sensible aux chocs 40, fixé à chaque extrémité d'un embranchement 34.

Le dispositif de sécurité aux chocs 40 présente une petite chambre étanche 44 reliée à la canalisation 32 et recevant la pression du gaz, qui est fermée par un poussoir 42 plaqué vers l'extérieur par cette pression interne, sur un joint d'étanchéité.

Le poussoir 42 du dispositif de sécurité 40 installé par exemple à l'avant d'un longeron du véhicule, et tourné vers l'avant, reçoit une poussée en cas de choc sur l'avant du véhicule. On a alors aussitôt un recul de ce poussoir et une ouverture de la chambre étanche 44 qui laisse sortir le gaz sous pression contenu dans la canalisation 32, ce qui vide l'accumulateur 2.

On peut ainsi installer plusieurs dispositif de sécurité aux chocs 40 en différents endroits stratégiques du véhicule, afin d'obtenir très vite une chute de la pression dès le début d'un choc sur ce véhicule.

La figure 4 présente un autre dispositif de sécurité aux chocs 40, comportant le poussoir 42 comprenant une pointe 52 qui est tournée vers une membrane 50 fermant la chambre étanche 44, de manière à percer cette membrane en cas de recul de ce poussoir.

On obtient de la même manière une ouverture de la canalisation 32 dès le début d'un choc qui peut avoir lieu en différents endroits du véhicule.

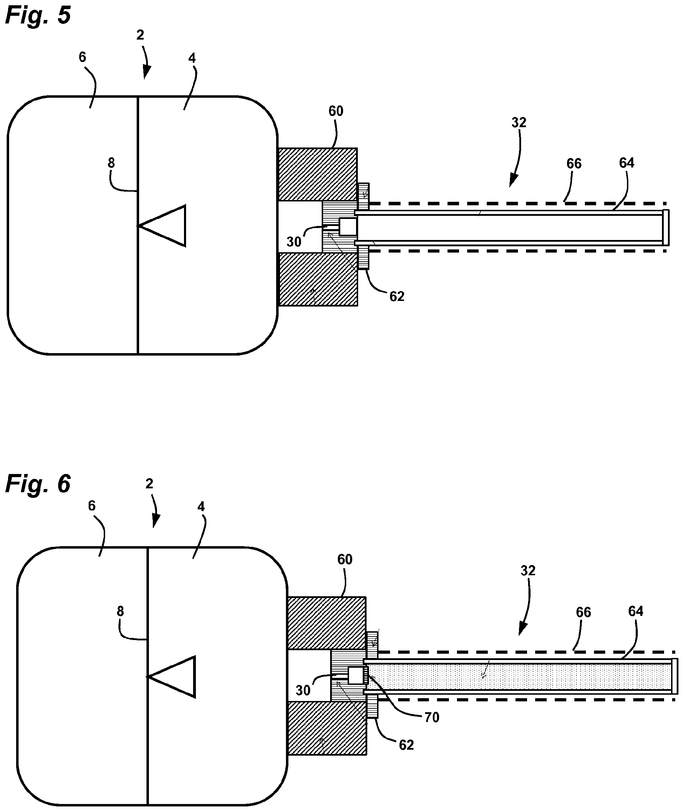

La figure 5 présente un bloc 60 fixé sur le corps de l'accumulateur 2, en face de la chambre à gaz 4, comportant un perçage recevant un bouchon 62 vissé de manière étanche.

Le bouchon 62 comporte successivement en partant de la chambre à gaz 4, un perçage de petit diamètre formant la restriction 30, puis un alésage de diamètre plus important recevant de manière étanche l'extrémité du tuyau souple 64 de la canalisation 32, qui est entouré par la tresse métallique 66.

On obtient ainsi un montage simple qui assure en même temps la fixation de la canalisation 32 sur l'accumulateur 2, et la restriction 30 régulant le débit de gaz.

La figure 6 présente en variante le même bouchon 62 vissé sur le bloc 60, comportant le perçage qui reçoit un disque de rupture 70 fermant le passage entre la restriction 30 et le tuyau souple 64 de la canalisation 32. La canalisation 32 isolée par le disque de rupture 70 de la chambre à gaz 4, est remplie d'un petit volume de fluide mis à une pression proche de celle de l'accumulateur.

On obtient ainsi une pression sensiblement équivalent de chaque côté du disque de rupture 70, tant que la canalisation 32 reste étanche.

En cas de rupture de la canalisation 32 après un incident comme présenté ci-dessus, et de perte de la pression interne avec un écoulement du petit volume de fluide contenu dedans, on obtient une forte différence de pression de chaque côté du disque de rupture 70 qui entraîne le perçage de ce disque. On a alors un vidage de la pression de l'accumulateur 2 en passant par la restriction 30, puis par cette canalisation ouverte 32.

Un avantage de la canalisation 32 remplie de fluide est qu'il est plus facile d'assurer par les différents systèmes de sécurité de cette canalisation, une étanchéité totale au fluide plutôt qu'au gaz. On réduit ainsi les risques de perte de pression indésirable dans la chambre à gaz 4.

D'une manière générale on obtient avec des moyens simples et économiques comportant une masse réduite, une protection améliorée des systèmes comportant des accumulateurs de pression, avec une détection des risques possibles en différents endroits.

Le dispositif d'accumulation de pression selon l'invention convient particulièrement pour les véhicules hybrides utilisant la pression hydraulique pour la traction, qui comportent des volumes assez importants de réserve de pression présentant un certain danger.

## Revendications

1. Dispositif d'accumulation de pression hydraulique comprenant un accumulateur (2) présentant une chambre contenant un gaz sous pression (4), séparée par une membrane mobile (8) d'une chambre contenant le fluide (6), comportant une canalisation externe (32) reliée à la chambre à gaz (4), équipée de systèmes de sécurité (40, 64) prévus pour s'ouvrir en cas d'agressions appliquées sur cette canalisation, la canalisation externe (32) étant équipée de ces systèmes de sécurité sensibles aux chocs (40, 64), ou à la température (64), **caractérisé en ce que** la canalisation (32) comporte un tuyau souple (64) prévu pour se percer en cas de choc important ou de forte élévation de température.

2. Dispositif d'accumulation de pression selon la revendication 1, **caractérisé en ce que** la canalisation externe (32) comporte différents embranchements (34).

3. Dispositif d'accumulation de pression selon la revendication 1 ou 2, **caractérisé en ce que** les systèmes de sécurité sensibles aux chocs (40) comportent un poussoir (42) prévu pour recevoir le choc, et ouvrir la canalisation (32).

4. Dispositif d'accumulation de pression selon la revendication 3, **caractérisé en ce que** le poussoir (42) agit sur une pointe (52) qui perce une membrane (50) assurant l'étanchéité de la canalisation (32).

5. Dispositif d'accumulation de pression selon l'une quelconque des revendications précédentes, **caractérisé en ce que** le tuyau souple (64) est entouré par une tresse métallique (66).

6. Dispositif d'accumulation de pression selon l'une quelconque des revendications précédentes, **caractérisé en ce qu'**il comporte une restriction de débit (30) disposée entre les systèmes de sécurité (40, 64) et la chambre à gaz (4).

7. Dispositif d'accumulation de pression selon l'une quelconque des revendications précédentes, **caractérisé en ce que** la canalisation (32) est remplie d'un fluide, qui est séparée de la chambre à gaz (4) par un disque de rupture (70) sensible à la pression.

8. Véhicule automobile hybride disposant d'une chaîne de traction utilisant l'énergie hydraulique, équipée d'un dispositif d'accumulation de pression, **caractérisé en ce que** ce dispositif est réalisé selon l'une quelconque des revendications précédentes.

## Patentansprüche

1. Hydraulische Druckspeichervorrichtung, die einen Speicher (2) umfasst, der eine Kammer aufweist, die ein Gas unter Druck (4) enthält, die von einer beweglichen Membran (8) von einer Kammer, die das Fluid (6) enthält, getrennt ist, die eine externe Rohrleitung (32) umfasst, die mit der Gaskammer (4) verbunden ist, die mit Sicherheitssystemen (40, 64) ausgestattet ist, die vorgesehen sind, um sich im Fall von Aggressionen, die auf diese Kanalisation ausgeübt werden, zu öffnen, wobei die externe Rohrleitung (32) mit diesen Sicherheitssystemen, die stoß- (40, 64) oder temperaturempfindlich (64) sind, ausgestattet ist, **dadurch gekennzeichnet, dass** die Rohrleitung (32) einen biegsamen Schlauch (64) umfasst, der dazu vorgesehen ist, im Fall eines starken Stoßes oder starker Temperaturerhöhung durchstoßen zu werden.

2. Druckspeichervorrichtung nach Anspruch 1, **dadurch gekennzeichnet, dass** die externe Rohrleitung (32) unterschiedliche Verzweigungen (34) umfasst.

3. Druckspeichervorrichtung nach Anspruch 1 oder 2, **dadurch gekennzeichnet, dass** die stoßempfindlichen Sicherheitssysteme (40) einen Stößel (42) umfassen, der vorgesehen ist, um den Stoß zu empfangen und die Rohrleitung (32) zu öffnen.

4. Druckspeichervorrichtung nach Anspruch 3, **dadurch gekennzeichnet, dass** der Stößel (42) auf eine Spitze (52) einwirkt, die eine Membran (50), die die Abdichtung der Rohrleitung (32) sicherstellt, durchstößt.

5. Druckspeichervorrichtung nach einem der vorstehenden Ansprüche, **dadurch gekennzeichnet, dass** der biegsame Schlauch (64) von einer Metallflechte (66) umgeben ist.

6. Druckspeichervorrichtung nach einem der vorstehenden Ansprüche, **dadurch gekennzeichnet, dass** sie eine Durchflusseinschnürung (30) umfasst, die zwischen den Sicherheitssystemen (40, 64) und der Gaskammer (4) angeordnet ist.

7. Druckspeichervorrichtung nach einem der vorstehenden Ansprüche, **dadurch gekennzeichnet, dass** die Rohrleitung (32) mit einem Fluid gefüllt ist, das von der Gaskammer (4) durch eine druckempfindliche Berstscheibe (70) getrennt ist.

8. Hybridkraftfahrzeug, das über einen Antriebsstrang verfügt, der die hydraulische Energie verwendet, der mit einem Druckspeicher ausgestattet ist, **dadurch gekennzeichnet, dass** diese Vorrichtung nach einem beliebigen der vorstehenden Ansprüche hergestellt ist.

## Claims

1. A device for the accumulation of hydraulic pressure, including an accumulator (2) having a chamber containing a gas (4) under pressure, which is separated from a chamber containing the fluid (6) by means of a mobile membrane (8), comprising an external pipeline (32) connected to the gas chamber (4), which is equipped with security systems (40, 64) provided to open in the event of unwanted forces applied to said pipeline, the external pipeline (32) being equipped with these security systems sensitive to shocks (40, 64), or to temperature (64), **characterized in that** the pipeline (32) comprises a flexible pipe (64) provided to rupture in the event of an intense shock or high rise in temperature.

2. The device for the accumulation of pressure according to Claim 1, **characterized in that** the external pipeline (32) comprises different branches (34).

3. The device for the accumulation of pressure according to Claim 1 or 2, **characterized in that** the security systems sensitive to shocks (40) comprise a push-piece (42) provided to receive the shock and to open the pipeline (32).

4. The device for the accumulation of pressure according to Claim 3, **characterized in that** the push-piece (42) acts on a point (52) which pierces a membrane (50) ensuring the sealing of the pipeline (32).

5. The device for the accumulation of pressure according to any one of the preceding claims, **characterized in that** the flexible pipe (64) is surrounded by a metallic braid (66).

6. The device for the accumulation of pressure according to any one of the preceding claims, **characterized in that** it comprises a flow restriction (30) disposed between the security systems (40, 64) and the gas chamber (4).

7. The device for the accumulation of pressure according to any one of the preceding claims, **characterized in that** the pipeline (32) is filled with a fluid which is separated from the gas chamber (4) by a pressure-sensitive rupture disc (70).

8. A hybrid motor vehicle having a powertrain using hydraulic energy, equipped with a device for the accumulation of pressure, **characterized in that** this device is realized according to any one of the preceding claims.
